# NEUE EUROPÄISCHE PATENTSCHRIFT

(11) **EP 0 503 143 B2**
(45) Veröffentlichungstag und Bekanntmachung des Hinweises auf die Entscheidung über den Einspruch: **05.04.2000**
(45) Hinweis auf die Patenterteilung: 25.01.1995
(21) Anmeldenummer: 91120541.7
(22) Anmeldetag: 29.11.1991
(51) Int. Cl.: F16M 1/021, F02F 7/00, F02F 11/00

(54) **Gehäuseverschlussdeckel**
Casing closing cover
Couvercle de fermeture de carter

(30) Priorität: 11.03.1991 DE 4107782; 17.10.1991 DE 4134316
(43) Veröffentlichungstag der Anmeldung: 16.09.1992
(73) Patentinhaber: CR Elastomere GmbH, 51379 Leverkusen (DE)
(72) Erfinder: Ecker, Rainer, Dipl.-Ing., W-5090 Leverkusen 3 (DE)

(56) Entgegenhaltungen:
- CH-A- 448 662
- DE-A- 3 606 052
- DE-A- 3 942 448
- DE-B- 1 255 393
- DE-B- 1 500 391
- DE-C- 3 405 819
- DE-C- 3 634 735
- DE-U- 7 605 223

## Beschreibung

Die Erfindung betriff ein Gehäuse und einen Gehäuseverschlußdeckel zur zentrischen Aufnahme von dynamisch beanspruchten Dichtungen für eine im Einbauzustand durch den Deckel sich erstreckenden Welle, insbesondere für Kurbelwellengehäuse von Kfz-Motoren, mit mehreren in einer radialen Flanschfläche angeordneten Schraubendurchgangslöchern sowie Mittel zur Zentrierung des Deckels gegenüber dem Kurbelwellengehäuse, wobei die Zentriermittel axial in Richtung Kurbelwellengehäuse sich erstreckende Vorsprünge sind, welche mit der radialen Flanschfläche verbunden sind. Ein derartiger Gehäuse verschlußdeckel ist aus der DE-OS-39 42 448 bekannt.

Die DE-PS 36 34 735 offenbart einen Gehäuseverschlußdeckel für Kurbelwellengehäuse von Kfz-Motoren. Der Deckel besteht aus einem Blechkörper, der zur Abdichtung der Kurbelwelle einen dynamisch belasteten Dichtungsring aus elastomerem Werkstoff sowie statisch wirkende Dichtstreifen, ebenfalls aus elastomerem Werkstoff, die einstückig ineinander übergehen, aufweist. Im Einbauzustand liegt eine radiale Flanschfläche mit statischen Dichtstreifen am Kurbelwellengehäuse an und wird mit Hilfe von durch Löcher steckbare Schrauben verspannt. Zur lagegerechten Fixierung beziehungsweise zur Zentrierung des Deckels gegenüber der Welle sind auf der radialen Flanschfläche neben den Schraubendurchgangslöchern zusätzliche Bohrungen für Zentriermittel in Form von Zentrierstiften vorgesehen. Die Zentrierstifte werden zunächst in Paßbohrungen des Kurbelwellengehäuses eingesetzt. Über diese Stifte wird dann der Deckel geschoben, so daß er vor der Verschraubung, zentriert zur Welle, am Kurbelwellengehäuse anliegt.

Die DE-OS 39 42 448 offenbart einen Gehäusedeckel für Kurbelwellengehäuse. Mit zwei in der Nähe des Flansches vorgesehene Paßbohrungen, die mit entsprechenden Paßstiften am Gehäuseteil korrespondieren, ist der Deckel fluchtend zur Welle montierbar.

Der Erfindung liegt die Aufgabe zugrunde, einen gattungsgemäßen Verschlußdeckel dahingehend zu verbessern, daß eine schnellere und kostengünstigere Montage als bisher möglich ist.

Diese Aufgabe wird erfindungsgemäß dadurch gelöst, daß die Vorsprünge in mit den Schraubendurchgangslöchern korrespondierenden Bohrungen des Kurbelwellengehäuses eingesteckt sind. Hierdurch können die sonst üblichen separaten Zentrierbohrungen im Kurbelwellengehäuse entfallen. Der Deckel besteht aus einem topfförmig gezogenen Blechkörper, wobei die Vorsprünge durch Ausstülpen der Schraubendurchgangslöcher gebildet sind. Mit dieser Maßnahme wird ein Gehäuseverschlußdeckel erzeugt, der in der Herstellung nicht teurer als bisher ist. Zur Anpassung an Fertigungstoleranzen ist es vorteilhaft, wenn die Ausstülpungen, in Umfangsrichtung gesehen, von der Kreisform abweichen.

Einem weiteren Gedanken der Erfindung gemäß ist am Außenumfang der Vorsprünge eine elastische Schicht angeordnet. Hierdurch besteht die Möglichkeit, die Maßtoleranzen bei der Herstellung des Gehäuseverschlußdeckels zu erweitern, wodurch sich die Herstellkosten senken.

Überdies ist es von Vorteil, wenn die elastische Schicht axial über den Endbereich der Vorsprünge hervorsteht, da der Rand der Vorsprünge hierdurch abgedeckt ist und eine Beschädigung der Vorsprünge beim Transport somit verhindert wird. Ein weiterer Vorteil ergibt sich, wenn die Schicht als eine die Vorsprünge abdeckende Haube ausgebildet ist. Mit diesem Gummiverschluß wird verhindert, daß Schmutz in die Passung eindringen kann; somit kann der Gehäuseverschlußdeckel bei Bedarf leichter demontiert werden beziehungsweise bei Reparaturarbeiten kann ein neuer Deckel leichter montiert werden.

Damit die Haube leicht in die korrespondierende Bohrung des Motorblocks einführbar ist, weist die Haube eine Spitze auf.

Die Erfindung ist in der Zeichnung dargestellt und wird im folgenden näher erläutert. Es zeigen:
Figur 1 Ansicht eines erfindungsgemäßen Gehäuseverschlußdeckels
Figur 2 Seitenansicht eines Gehäuseverschlußdeckels als Prinzipskizze
Figur 3 Ausschnittsvergrößerung gemäß Figur 2
Figur 4 Ausschnittsvergrößerung gemäß Figur 1
Figur 5 Alternative gemäß Figur 3

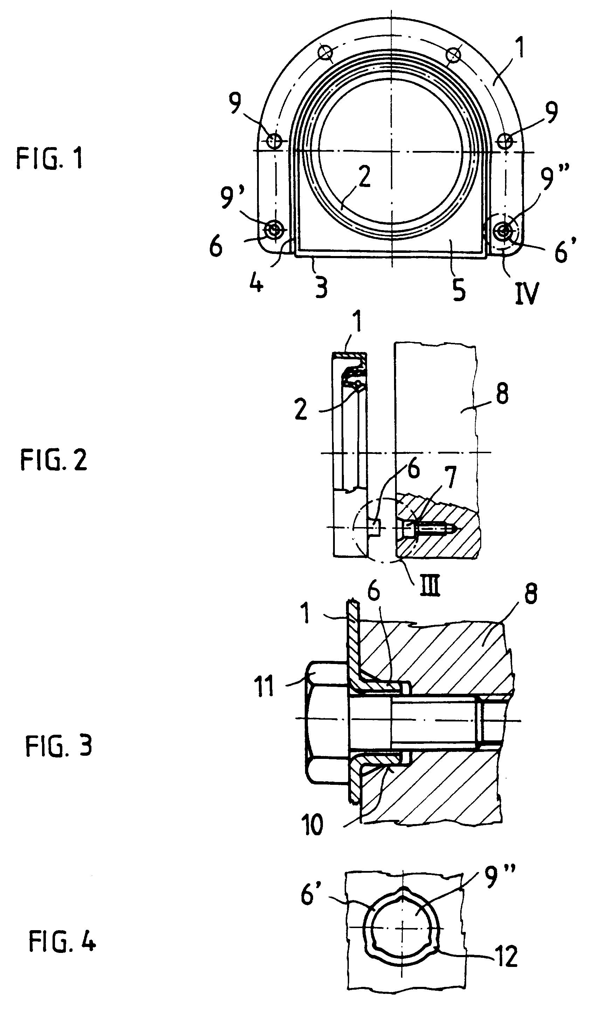

Der in der Figur 1 dargestellte Gehäuseverschlußdeckel dient zur Abdichtung eines Kurbelwellengehäuses eines Kraftfahrzeugmotors. Der Deckel (1) besteht aus einem topfförmig gezogenen Blechkörper. Zur Abdichtung der Kurbelwelle (nicht gezeichnet) dient ein dynamisch belasteter Lippendichtungsring (2) aus elastomerem Werkstoff. Zur statischen Abdichtung sind auf der radialen Flanschfläche (5) Dichtstreifen (3, 4) vorgesehen. Im Einbauzustand liegt der Dichtstreifen (3) am Kurbelwellengehäuse an und wird mit Hilfe von durch Löcher (9, 9', 9'') steckbaren Schrauben verspannt. Zur lagegerechten Fixierung beziehungsweise als Zentriermittel sind erfindungsgemäß mindestens zwei Löcher (9', 9'') axial nach außen gestülpt.

Wie in der Figur 2 dargestellt, werden auf diese Weise axiale Vorsprünge (6, 6') gebildet. Die Vorsprünge (6, 6') greifen beim Einbau des Gehäuseverschlußdeckels (1) in Bohrungen (7) des Kurbelwellengehäuses (8), wobei die Bohrungen (7) gleichzeitig als Aufnahmebohrungen der durch die Löcher (9, 9', 9'') steckbare Schraube (11) dienen (Figur 3). Auf diese Weise kann auf Paßstifte verzichtet werden, da die Vorsprünge (6, 6') sich mit ihrem Außenumfang (10) am Kurbelwellengehäuse (8) zentrieren.

Zur besseren Anpassung der Vorsprünge (6, 6') an die Bohrungen (7) des Kurbelwellengehäuses (8) können die Vorsprünge (6, 6'), im Querschnitt gesehen, geringfügig von der Kreisform abweichen, so daß bei fertigungsbedingten Herstellungstoleranzen die Vorsprünge (6, 6') mit radial gerichteten Rippen (12) (Figur 4) punktweise in den Bohrungen (7) zur Anlage gelangen.

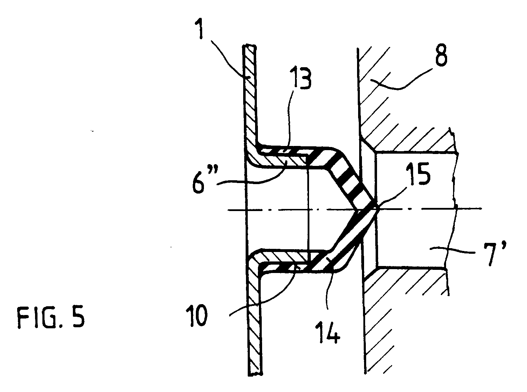

Die Figur 5 zeigt eine weitere Ausgestaltung der Erfindung.
Hierbei besteht nun die Möglichkeit, die Vorsprünge (6'') mit einer Haube (14) aus elastischem Material abzudecken. Dabei ist die Haube (14) so geformt, daß sie leicht in die korrespondierende Bohrung (7') einsteckbar ist, d.h. die Haube (14) kann eine Spitze (15) aufweisen oder konisch verlaufen.

Die Haube (14) übergreift den Außenumfang (10) der Vorsprünge (6'') mit einer Schicht (13) und ist mit dem Gehäuseverschlußdeckel durch Vulkanisation oder mit einem Kleber verbunden. Der Vorteil dieser Konstruktion liegt darin, daß die Vorsprünge nicht mehr mit einer hohen Genauigkeit gefertigt werden müssen, da die Gummischicht (13) Maßtoleranzen ausgleichen kann. Darüber hinaus kann kein Schmutz in die korrespondierende Bohrung im Motorblock eindringen, womit eine leichte Montage beziehungsweise Demontage bei Reparaturarbeiten möglich wird. Außerdem wird der rauhe Ziehrand am Blech durch den Gummikörper abgedeckt, so daß Verletzungsgefahren vermieden werden.

## Patentansprüche

1. Kurbelwellengehäuse (8) und Gehäuseverschlußdeckel (1) zur zentrischen Aufnahme von dynamisch beanspruchten Dichtungen (2) für die im Einbauzustand durch den Deckel (1) sich erstreckende Kurbelwelle für einen Kfz-Motor
- mit mehreren in einer radialen Flanschfläche angeordneten Schraubendurchgangslöchern (9, 9', 9'')
- sowie Mitteln zur Zentrierung des Deckels gegenüber dem Kurbelwellengehäuse (8),
- wobei die Zentriermittel axial in Richtung Kurbelwellengehäuse sich erstreckende Vorsprünge (6) sind, welche mit der radialen Flanschfläche verbunden sind und Bohrungen (7, 7') im Kurbelwellengehäuse (8) eingreifen,
**dadurch gekennzeichnet, daß**
- die Vorsprünge (6, 6', 6'') in mit den Schraubendurchgangslöchern (9', 9'') korrespondierende Bohrungen (7, 7') des Kurbelwellengehäuses (8) eingesteckt sind,
- wobei der Gehäuseverschlußdeckel (1) ein topfförmig gezogener Blechkörper ist,
- dessen Vorsprünge (6, 6') bei der Herstellung dieses Deckels durch Ausstülpen der Schraubendurchgangslöcher (9', 9'') gebildet sind.

2. Gehäuse und Gehäuseverschlußdeckel nach Anspruch 1, dadurch gekennzeichnet, daß die Ausstülpungen, im Querschnitt gesehen, an mehreren Umfangsstellen von der Kreisbahn abweichen.

3. Gehäuse und Gehäuseverschlußdeckel nach den Ansprüchen 1 oder 2, dadurch gekennzeichnet, daß am Außenumfang (10) der Vorsprünge (6, 6', 6'') eine elastische Schicht (13) angeordnet ist.

4. Gehäuse und Gehäuseverschlußdeckel nach Anspruch 3, dadurch gekennzeichnet, daß die elastische Schicht (13) axial über den Endbereich der Vorsprünge (6, 6', 6'') hervorsteht.

5. Gehäuse und Gehäuseverschlußdeckel nach Anspruch 3 oder 4, dadurch gekennzeichnet, daß die Schicht (13) als eine die Vorsprünge (6'') abdeckende Haube (14) ausgebildet ist.

6. Gehäuse und Gehäuseverschlußdeckel nach Anspruch 5, dadurch gekennzeichnet, daß die Haube (14) eine in Richtung der Bohrung (7') weisende Spitze (15) aufweist.

## Claims

1. Crankcase housing (8) and housing closure cover (1) for centrally receiving dynamically stressed seals (2) for the crankshaft for a motor vehicle engine extending through the cover (1) in the fitted state,
- with several bolt through-holes (9, 9', 9'') arranged in a radial flange surface
- as well as means for centering the cover relative to the crankcase (8),
- wherein the centering means are projections (6) which extend axially in the direction of the crankcase and which are connected to the radial flange surface and engage in bores (7, 7') in the crankcase (8),
characterized in that
- the projections (6, 6', 6'') are inserted in bores (7, 7') of the crankcase (8) corresponding to the bolt through-holes (9', 9''),
- wherein the housing closure cover (1) is a pot-shaped drawn sheet metal body,
- whose projections are formed by reverse drawing the bolt through-holes (9', 9'').

2. Housing and housing closure cover according to claim 1, characterized in that the reverse drawn portions as seen in cross-section deviate from the circular shape at several circumferential points.

3. Housing and housing closure according to claim 1 or 2, characterized in that an elastic layer (13) is arranged on the outer circumference (10) of the projections (6, 6', 6'').

4. Housing and housing closure cover according to claim 3, characterized in that the elastic layer (13) protrudes axially beyond the end region of the projections (6, 6', 6'').

5. Housing and housing closure cover according to claim 3 or 4, characterized in that the layer (13) is constructed as a hood (14) covering the projections (6'').

6. Housing and housing closure cover according to claim 5, characterized in that the hood (14) has a point (15) pointing in the direction of the bore (7').

## Revendications

1. Boîtier de vilebrequin et couvercle de fermeture de boîtier destinés à la réception centrale de garnitures d'étachnéité (2) sollicitées dynamiquement pour un arbre s'étendant à l'état monté à travers le couvercle (1), en particulier pour un boîtier de vilebrequin (8) de véhicule automobile comprenant:
- plusieurs trous de passage de vis (9, 9', 9'') prévus dans une surface de bride radiale,
- ainsi que des moyens de centrage du couvercle par rapport au boîtier de vilebrequin (8),
- les moyens de centrage étant des projections (6) s'étandant axialement en direction du boîtier de vilebrequin, lesdites projections étant reliées à la surface de bride radiale et pénétrant dans des alésages (7, 7') dans le boîtier de vilebrequin (8),
caractérisé en ce que
- les projections (6, 6') sont insérées dans les alésages (7) du boîtier de vilebrequin (8) correspondant aux trous (9', 9'') de passage des vis,
- le couvercle de fermeture de boîtier est un corps de tôle étiré en forme de pot,
- dont les projections (6, 6') sont formées par emboutissage des trous (9', 9'') de passage des vis.

2. Boîtier et couvercle de fermeture de boîtier selon la revendication 1, caractérisé en ce que les emboutissages, vus en section, s'écartent de la forme circulaire en plusieurs endroits de la périphérie.

3. Boîtier et couvercle de fermeture de boîtier selon la revendication 1 ou 2, caractérisé en ce que qu'une couche élastique (13) est prévue à la périphérie extérieure (10) des projections (6, 6', 6'').

4. Boîtier et couvercle de fermeture de boîtier selon la revendication 3, caractérisé en ce que la couche élastique (13) fait saillic axialement sur la zone d'extrémité des projections (6, 6', 6'').

5. Boîtier et couvercle de fermeture de boîtier selon la revendication 3 ou la revendication 4, caractérisé en ce que la couche (13) est réalisée sous la forme d'une calotte (14) recouvrant les projections (6'').

6. Boîtier et couvercle de fermeture de boîtier selon la revendication 5, caractérisé en ce que la calotte (4) présente une pointe (15) dirigée en direction de l'alésage (7').
